(19) **Europäisches Patentamt European Patent Office Office européen des brevets**

(11) **EP 4 678 418 A1**

(12) **EUROPEAN PATENT APPLICATION**
published in accordance with Art. 153(4) EPC

(43) Date of publication:
14.01.2026 Bulletin 2026/03

(51) International Patent Classification (IPC):
**B60C 9/18** $^{(2006.01)}$   **B60C 9/20** $^{(2006.01)}$
**B60C 9/22** $^{(2006.01)}$

(21) Application number: 23926425.2

(22) Date of filing: 13.11.2023

(52) Cooperative Patent Classification (CPC):
**B60C 9/18; B60C 9/20; B60C 9/22**

(86) International application number:
**PCT/JP2023/040814**

(87) International publication number:
**WO 2024/185219 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 06.03.2023 JP 2023034085

(71) Applicant: BRIDGESTONE CORPORATION
Chuo-ku
Tokyo 104-8340 (JP)

(72) Inventors:
• **OBANA, Naohiko**
  **Tokyo 104-8340 (JP)**
• **SHIBATA, Saki**
  **Tokyo 104-8340 (JP)**
• **KOCHI, Naoto**
  **Tokyo 104-8340 (JP)**

(74) Representative: **Marks & Clerk LLP**
**15 Fetter Lane**
**London EC4A 1BW (GB)**

(54) **TIRE**

(57) A tire includes one or more circumferential belt layers T06b and a pair of intersecting belt layers T06c disposed adjacent to the circumferential belt layers. When a longitudinal rigidity of cords of the circumferential belt layers is defined as ELb, the number of layers of the circumferential belt layers is defined as Nb, a longitudinal rigidity of the cords of the innermost intersecting belt layer, which is positioned innermost in the tire radial direction among the pair of intersecting belt layers, is defined as ELc1, an acute angle with respect to the tire circumferential direction of the cords of the innermost intersecting belt layer is defined as θ1, a longitudinal rigidity of the cords of the outermost intersecting belt layer, which is positioned outermost in the tire radial direction among the pair of intersecting belt layers, is defined as ELc2, and an acute angle with respect to the tire circumferential direction of the cords of the outermost intersecting belt layer is defined as θ2, the following expression (1) is satisfied: $ELb \times Nb/(ELc1 \times cos^4\theta1 + ELc2 \times cos^4\theta2) < 0.6 \ ...(1)$.

FIG. 2

**Description**

TECHNICAL FIELD

The present disclosure relates to a tire.

This application claims priority based on Japanese Patent Application No. 2023-034085 filed in Japan on March 6, 2023, the entire contents of which are incorporated herein by reference.

BACKGROUND

It has been proposed to dispose a circumferential belt layer in order to suppress the radial growth of a pneumatic tire (for example, PTL 1).

CITATION LIST

Patent Literatures

PTL 1: JP 2009-196548 A

SUMMARY

(Technical Problem)

However, in conventional tires, although the installation of a circumferential belt layer suppresses the radial growth of the tire, there has been room for improvement in the uneven wear resistance of the tire.

The present disclosure aims to provide a tire that is superior in both suppression of radial growth and uneven wear resistance.

(Solution to Problem)

[1] A tire comprising:

one or more circumferential belt layers; and
a pair of intersecting belt layers disposed adjacent to the circumferential belt layers,
wherein cords of each of the circumferential belt layers have an angle $\alpha$ with respect to the tire circumferential direction of 5° or less,
wherein the pair of intersecting belt layers have cords that intersect each other in the tire radial direction,
wherein, when a longitudinal rigidity of the cords of the circumferential belt layers is defined as ELb, the number of layers of the circumferential belt layers is defined as Nb, a longitudinal rigidity of the cords of the innermost intersecting belt layer, which is positioned innermost in the tire radial direction among the pair of intersecting belt layers, is defined as ELc1, an acute angle with respect to the tire circumferential direction of the cords of the innermost intersecting belt layer is defined as $\theta 1$, a longitudinal rigidity of the cords of the outermost intersecting belt layer, which is positioned outermost in the tire radial direction among the pair of intersecting belt layers, is defined as ELc2, and an acute angle with respect to the tire circumferential direction of the cords of the outermost intersecting belt layer is defined as $\theta 2$, the following formula (1) is satisfied:

$$ELb \times Nb/(ELc1 \times \cos^4 \theta 1 + ELc2 \times \cos^4 \theta 2) < 0.6 \quad \dots (1)$$

(Advantageous Effect)

According to the present disclosure, it is possible to provide a tire that is superior in both suppression of radial growth and uneven wear resistance.

BRIEF DESCRIPTION OF THE DRAWINGS

In the accompanying drawings:

FIG. 1: A cross-sectional view in the tire width direction schematically illustrating a part of a tire according to one embodiment of the present disclosure, by a cross-section in the tire width direction;

FIG. 2: An explanatory diagram for explaining the configuration of the belt in FIG. 1, and a schematic diagram schematically illustrating a part of the belt;

FIG. 3: A diagram illustrating an example of an S-S curve (load-strain curve) of an extracted cord of the circumferential belt layer in FIG. 2;

FIG. 4: A diagram illustrating an example of an S-S curve (load-strain curve) of a green cord of the circumferential belt layer in FIG. 2;

FIG. 5: A cross-sectional view schematically illustrating an extracted cord of the circumferential belt layer in FIG. 2;

FIG. 6: A cross-sectional view of a green cord of the circumferential belt layer in FIG. 2;

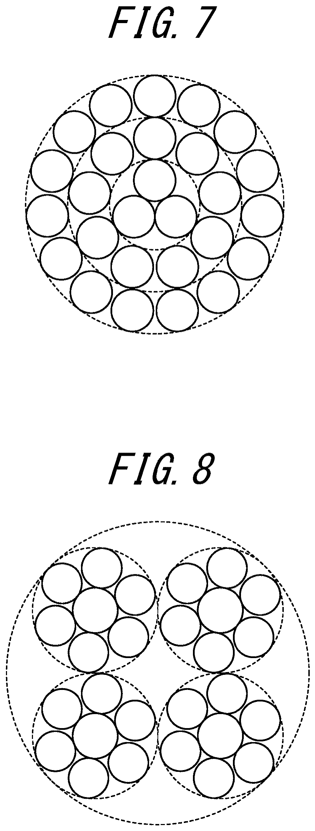

FIG. 7: A cross-sectional view illustrating a green cord of the circumferential belt layer of a tire according to a comparative example;

FIG. 8: A cross-sectional view illustrating a green cord of the circumferential belt layer of a tire according to Example 1 and Example 2;

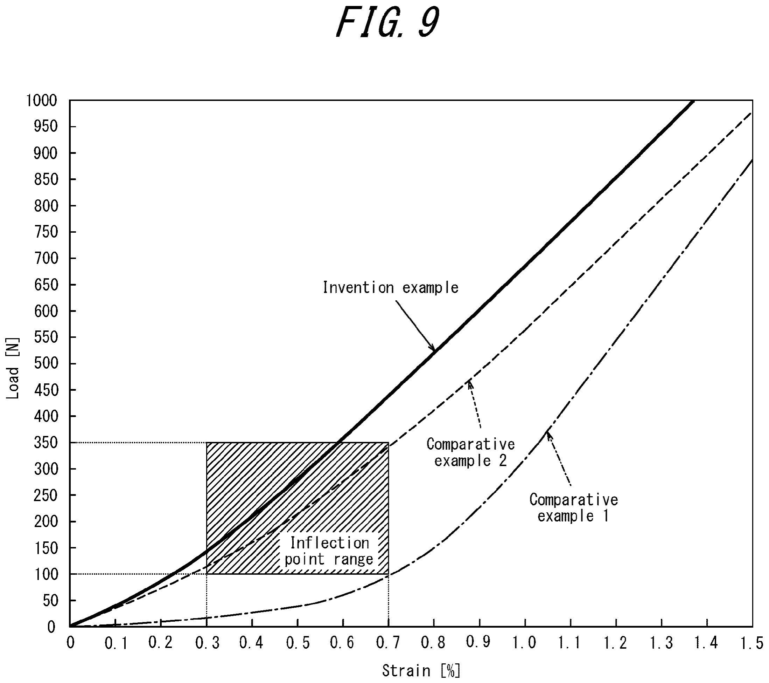

FIG. 9: A diagram illustrating S-S curves (load-strain curves) of extracted cords of the circumferential belt layers of tires according to Example 1, Example 2, and the comparative example;

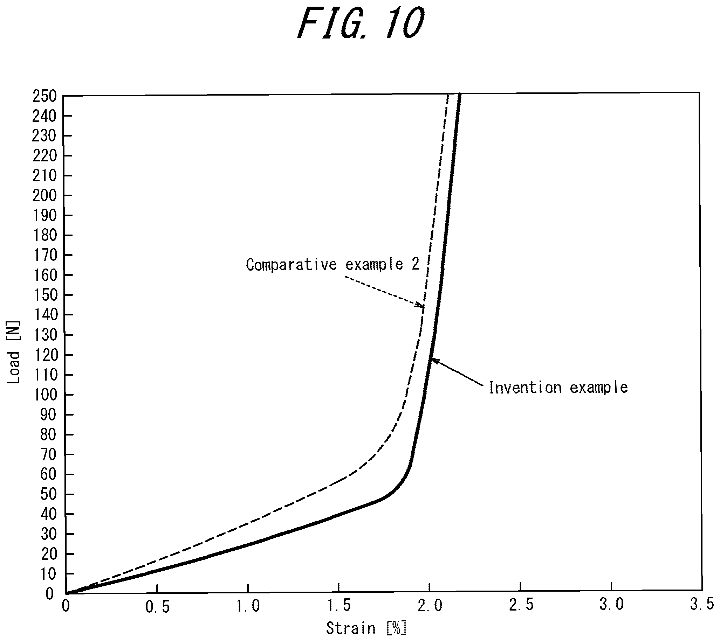

FIG. 10: A diagram illustrating S-S curves (load-strain curves) of green cords of the circumferential belt layers of tires according to Example 1 and Example 2; and

FIG. 11: A drawing for explaining an internal structure of a tire applicable to any embodiment of the present disclosure, and a cross-sectional view in the tire width direction schematically illustrating a half portion of the tire by a cross-section in the tire width direction.

The tire according to the present disclosure can be suitably used for any type of pneumatic tire for four-wheeled vehicles, and is particularly suitable for use as a heavy-duty pneumatic tire (for example, a pneumatic tire for trucks and buses, an off-the-road (construction vehicle) pneumatic tire, etc.).

Hereinafter, embodiments of the tire according to the present disclosure will be illustratively described with reference to the drawings. In each drawing, the same reference numerals are assigned to common members and portions.

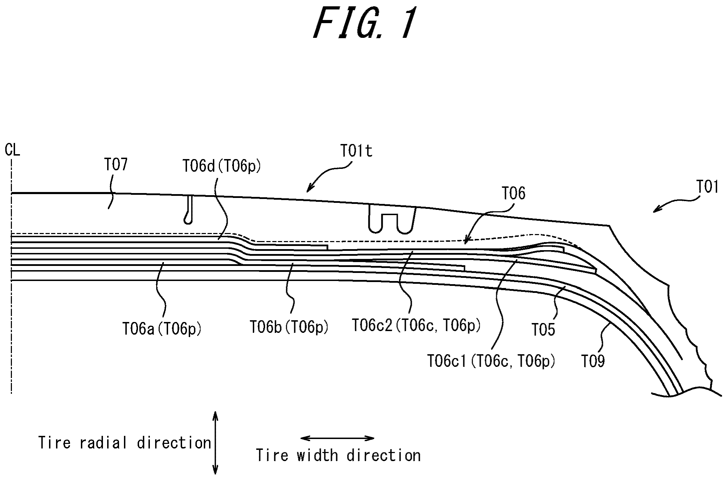

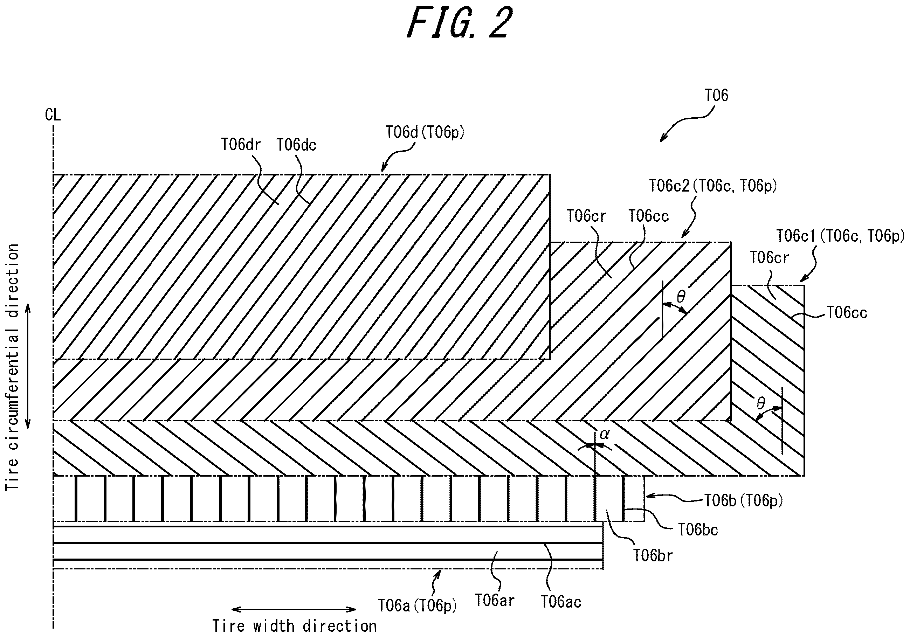

FIGS. 1 to 5 are drawings for explaining a tire T01 according to one embodiment of the present disclosure. FIG. 1 is a cross-sectional view in the tire width direction, schematically depicting a part of a half portion of the tire T01 (the portion on one side with respect to the tire equatorial plane CL) according to one embodiment of the present disclosure, by a cross-section in the tire width direction. FIG. 2 is an explanatory diagram for explaining the configuration of the belt T06 in FIG. 1, and is a schematic diagram schematically depicting a part of the tire circumferential direction on one side with respect to the tire equatorial plane CL of the belt T06. The tire T01 of the present embodiment is configured as a heavy-duty pneumatic tire, particularly as a pneumatic tire for trucks and buses. However, the tire T01 in each example described in this specification can be suitably used for any type of pneumatic tire for four-wheeled vehicles.

As illustrated in FIG. 1, the tire T01 is provided with a belt T06 in the tread portion T01t. The belt T06 is disposed on the tire radial outer side with respect to the crown portion of the carcass T05. The belt T06 is provided with a plurality of belt layers T06p (in the example of FIG. 1, five layers). As illustrated in FIG. 2, each belt layer T06p is composed of a rubberized layer of cords, that is, includes one or more cords and coating rubber covering the cords. It is preferable that the cords of each belt layer T06p are made of steel.

As illustrated in FIGS. 1 and 2, in the present embodiment, the belt T06 includes, as belt layers T06p, one or more (in the example of FIG. 1, only one) circumferential belt layer(s) T06b, and a pair of intersecting belt layers T06c disposed adjacent to the circumferential belt layer(s) T06b. As illustrated in FIG. 2, each circumferential belt layer T06b includes one or more steel cords T06bc and coating rubber T06br covering the cords T06bc. Each intersecting belt layer T06c includes one or more steel cords T06cc and coating rubber T06cr covering the cords T06cc. The cords T06bc of each circumferential belt layer T06b extend substantially parallel to the tire circumferential direction, and the angle $\alpha$ (FIG. 2) with respect to the tire circumferential direction is 5° or less. It is preferable that the cords T06bc extend linearly. The pair of intersecting belt layers T06c have their respective cords T06cc intersecting each other in the tire radial direction (that is, as the cords T06cc of the pair of intersecting belt layers T06c extend toward one side in the tire circumferential direction, they extend toward opposite sides in the tire width direction). In the present embodiment, the single circumferential belt layer T06b is disposed on the tire radial inner side relative to the pair of intersecting belt layers T06c.

In the present embodiment, the belt T06 satisfies the following formula (1):

$$\mathrm{ELb} \times \mathrm{Nb} / (\mathrm{ELc1} \times \cos^4\theta1 + \mathrm{ELc2} \times \cos^4\theta2) < 0.6 \quad \ldots(1)$$

In formula (1):

ELb: longitudinal rigidity (kN) of the cords T06bc of the circumferential belt layer T06b,

Nb: number of layers of the circumferential belt layer T06b,

ELcl: longitudinal rigidity (kN) of the cords T06cc of the intersecting belt layer T06c positioned innermost in the tire radial direction among the pair of intersecting belt layers T06c (hereinafter also referred to as the "innermost intersecting belt layer (T06c1)"),

01: acute angle (°) with respect to the tire circumferential direction of the cords T06cc of the innermost intersecting belt layer T06c 1,

ELc2: longitudinal rigidity (kN) of the cords T06cc of the intersecting belt layer T06c positioned outermost in the tire radial direction among the pair of intersecting belt layers T06c (hereinafter also referred to as the "outermost intersecting belt layer (T06c2)"),

$\theta2$: acute angle (°) with respect to the tire circumferential direction of the cords T06cc of the outermost intersecting belt layer T06c2.

The circumferential belt layer T06b and the pair of intersecting belt layers T06c may, for example, be arranged in order from the tire radial inner side to the tire radial outer side as the innermost intersecting belt layer T06c1, the outermost intersecting belt layer T06c2, and the circumferential belt layer T06b, or, as in the example of FIG. 2, as the circumferential belt layer T06b, the innermost intersecting belt layer T06c1, and the outermost intersecting belt layer T06c2, or as the innermost intersecting belt layer T06c1, the circumferential belt layer T06b, and the outermost intersecting belt layer T06c2. There are no other belt layers T06p between the circumferential belt layer T06b and the adjacent intersecting belt layer T06c. The circumferential belt layer T06b and the adjacent intersecting belt layer T06c may be in contact or may not be in contact.

In the example of FIG. 1, Nb = 1.

The longitudinal rigidity ELb (kN) of the cords T06bc of the circumferential belt layer T06b is determined by the following formula (2):

$$\mathrm{ELb} = \mathrm{Sb} \times \mathrm{Mb} \quad \ldots(2)$$

In formula (2):

Sb: rigidity (GPa) of the cords T06bc of the circumferential belt layer T06b,

Mb: amount of steel per unit width ($mm^2$) of the cords T06bc of the circumferential belt layer T06b.

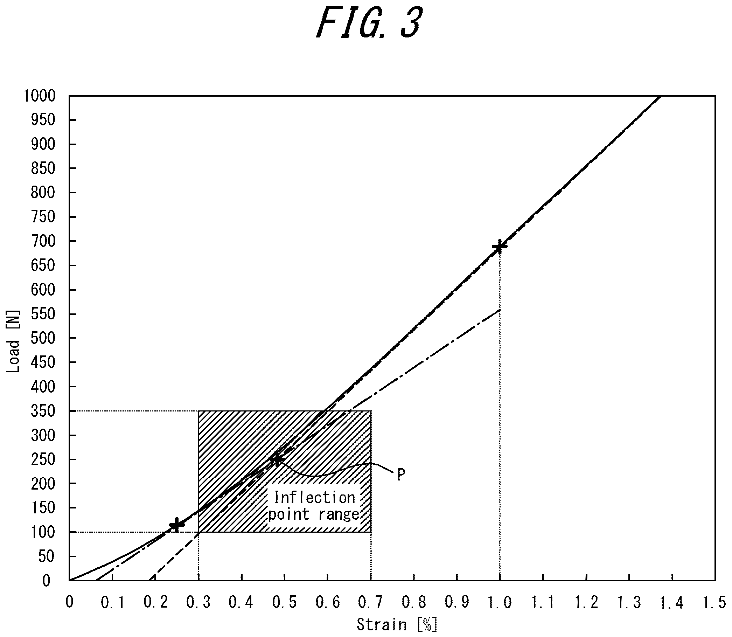

The rigidity Sb of the cords T06bc of the circumferential belt layer T06b is determined from the slope of the tangent (broken line) at 1.0% strain in the S-S curve (load-strain curve) (FIG. 3) of the cords T06bc (specifically, the extracted cord KC described below).

The amount of steel per unit width Mb of the cords T06bc of the circumferential belt layer T06b is determined by (total cross-sectional area of filaments constituting the cords T06bc) × (number of cords per 50 mm width).

When there are a plurality of circumferential belt layers T06b, it is preferable that the longitudinal rigidity of the cords T06bc of the circumferential belt layers T06b is the same among the circumferential belt layers T06b, but if they differ among the circumferential belt layers T06b, the average value thereof (that is, the value obtained by dividing the sum of the longitudinal rigidity of the cords T06bc of each circumferential belt layer T06b by the number of circumferential belt layers T06b) is used as ELb.

The longitudinal rigidity ELc1 of the cords T06cc of the innermost intersecting belt layer T06c1 is determined by the following formula (3):

$$\mathrm{ELc1} = \mathrm{Sc1} \times \mathrm{Mc1} \quad \ldots(3)$$

In formula (3):

Sc1: rigidity (GPa) of the cords T06cc of the innermost intersecting belt layer T06c1,

Mc1: amount of steel per unit width ($mm^2$) of the cords T06cc of the innermost intersecting belt layer T06c1.

The rigidity Sc1 of the cords T06cc of the innermost intersecting belt layer T06c1 is determined from the slope of the tangent (broken line) at 1.0% strain in the S-S curve (load-strain curve) of the cords T06cc (specifically, the extracted cord KC).

The amount of steel per unit width Mc1 of the cords T06cc of the innermost intersecting belt layer T06c1 is determined by (total cross-sectional area of filaments constituting the cords T06cc) × (number of cords per 50 mm width).

The longitudinal rigidity ELc2 of the cords T06cc of the outermost intersecting belt layer T06c2 is determined by the following formula (4):

$$\mathrm{ELc2 \;=\; Sc2 \;\times\; Mc2} \quad \ldots(4)$$

In formula (4):

Sc2: rigidity (GPa) of the cords T06cc of the outermost intersecting belt layer T06c2,
Mc2: amount of steel per unit width (mm$^2$) of the cords T06cc of the outermost intersecting belt layer T06c2.

The rigidity Sc2 of the cords T06cc of the outermost intersecting belt layer T06c2 is determined from the slope of the tangent (broken line) at 1.0% strain in the S-S curve (load-strain curve) of the cords T06cc (specifically, the extracted cord KC).

The amount of steel per unit width Mc2 of the cords T06cc of the outermost intersecting belt layer T06c2 is determined by (total cross-sectional area of filaments constituting the cords T06cc) × (number of cords per 50 mm width).

By providing the circumferential belt layer T06b, it is possible to effectively suppress radial growth. Furthermore, in the present embodiment, the circumferential belt layer T06b and the pair of intersecting belt layers T06c disposed adjacent thereto satisfy the above formula (1). As a result, the rigidity difference between the circumferential belt layer T06b and the pair of intersecting belt layers T06c is kept within an appropriate range, thereby suppressing radial growth and improving the uneven wear resistance of the tire T01.

In each example described in this specification, it is preferable that the acute angle θ (FIG. 2) with respect to the tire circumferential direction of the cords T06cc of each intersecting belt layer T06c is 15° or more. This allows further improvement in wear resistance. In each example described in this specification, it is preferable that the acute angle θ with respect to the tire circumferential direction of the cords T06cc of each intersecting belt layer T06c is 50° or less, and more preferably 40° or less. This allows improvement in durability and further suppression of radial growth.

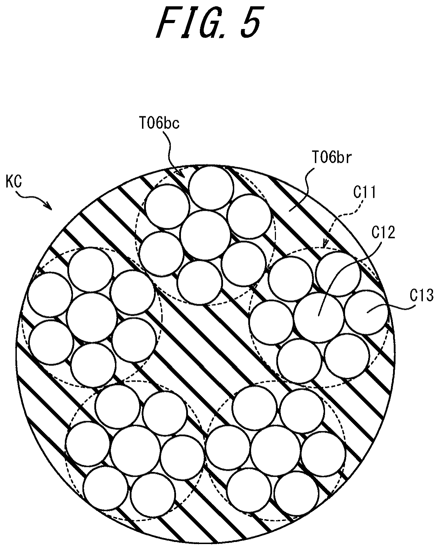

In each example described in this specification, it is preferable that the elastic modulus E1 in a high strain region of the extracted cord KC of the circumferential belt layer T06b is 30 GPa to 80 GPa. The following describes this in detail. FIG. 5 is a cross-sectional view schematically depicting the extracted cord KC of the circumferential belt layer T06b in FIG. 2. In this specification, the term "extracted cord (KC)" refers to a cord with rubber, which is obtained by dissecting a vulcanized tire T01 and extracting the cord, preferably by scraping off as much of the coating rubber around the cord as possible. More specifically, the extracted cord KC is obtained by extracting the cord from the vulcanized tire T01 while scraping off as much of the coating rubber around the cord as possible, and consists of the cord itself and the coating rubber attached to the gaps of the cord (that is, the void portions inside the virtual circumscribed circle of the cord cross-section that are not occupied by the cord, for example, the gaps between filaments constituting the cord), i.e., the coating rubber present in the void portions. For example, the extracted cord KC of the circumferential belt layer T06b schematically depicted in FIG. 5 consists of the cord T06bc and the coating rubber T06br attached to the gaps (gaps between the filaments C12 and C13 constituting the cord T06bc) of the cord T06bc. FIG. 3 is a diagram illustrating an example of the S-S curve (load-strain curve) of the extracted cord KC of the circumferential belt layer T06b in FIG. 2. In FIG. 3, the one-dot chain line is the tangent at 0.25% strain, and the broken line is the tangent at 1.0% strain. The elastic modulus L1 in a high strain region of the extracted cord KC of the circumferential belt layer T06b refers to the value obtained by dividing the slope of the tangent (broken line) at 1.0% strain in the load-strain curve (FIG. 3) of the extracted cord KC of the circumferential belt layer T06b by the total cross-sectional area of the filaments constituting the extracted cord KC and thus the cord T06bc. If the elastic modulus E1 in a high strain region of the extracted cord KC of the circumferential belt layer T06b exceeds 80 GPa, the rigidity step between the circumferential belt layer T06b and the intersecting belt layer T06c becomes large, the strain in that region also becomes large, and the cord break resistance of the cords T06bc of the circumferential belt layer T06b decreases. On the other hand, if the elastic modulus E1 in a high strain region of the extracted cord KC of the circumferential belt layer T06b is less than 30 GPa, the elastic modulus (E2 described below) in the low strain region decreases accordingly, and it becomes impossible to effectively suppress the radial growth of the tire T01 when internal pressure is applied. For similar reasons, it is preferable that the elastic modulus E1 in a high strain region of the extracted cord KC of the circumferential belt layer T06b is 40 GPa to 70 GPa.

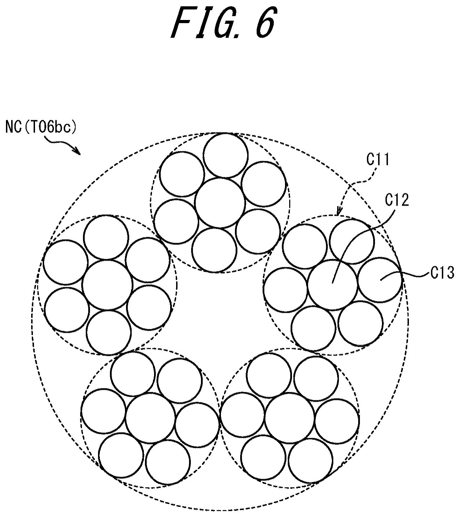

In each example described in this specification, it is preferable that the cords T06bc of the circumferential belt layer T06b have a plurality of filaments, as illustrated in FIG. 6. In this case, it is preferable that, for all the filaments constituting the cord T06bc, the ratio B/A of the filament diameter B to the cord diameter A is 0.13 or less (preferably 0.11 or less). This allows improvement in cord break resistance while obtaining good cord strength for the cords T06bc of the circumferential belt layer T06b. If the ratio B/A exceeds 0.13, the filament diameter B becomes large relative to the cord diameter A, and filament breakage due to bending deformation of the filaments caused by tension in the cord T06bc is more likely to occur. On the other hand, if the filament diameter B is too small, sufficient cord strength of the cord T06bc cannot be obtained, so it is preferable that the ratio B/A is 0.09 or more. In the example of FIG. 6, the cord T06bc of the circumferential belt layer T06b is composed of one core filament C12 and six sheath filaments C13. However, the cord T06bc of the circumferential belt layer T06b may have a different configuration.

In each example described in this specification, it is preferable that the tire T01 is provided with only one circumferential belt layer T06b, as in the examples of FIGS. 1 and 2. In this case, suppression of radial growth and improvement in durability of the tire can be more favorably achieved in balance. However, the tire T01 may be provided with a plurality of circumferential belt layers T06b.

In each example described in this specification, it is preferable that, as in the examples of FIGS. 1 and 2, for each intersecting belt layer T06c, the acute angle θ (FIG. 2) with respect to the tire circumferential direction of the cords T06cc is the same for both. In this case, suppression of radial growth and improvement in durability of the tire can be more favorably achieved in balance.

In each example described in this specification, it is preferable that the gauge in the tire radial direction between the pair of intersecting belt layers T06c is 0.46 mm to 0.66 mm in the region of 50% of the full width of the ground contact region at the center in the tire width direction. In this case, suppression of radial growth and improvement in durability of the tire can be more favorably achieved in balance.

In each example described in this specification, it is preferable that the elastic modulus E2 in a low strain region of the extracted cord KC of the circumferential belt layer T06b is 15 GPa to 60 GPa. The elastic modulus E2 in a low strain region of the extracted cord KC of the circumferential belt layer T06b refers to the value obtained by dividing the slope of the tangent (one-dot chain line) at 0.25% strain in the load-strain curve (FIG. 3) of the extracted cord KC of the circumferential belt layer T06b by the total cross-sectional area of the filaments constituting the extracted cord KC and thus the cord T06bc. By setting the elastic modulus E2 in a low strain region of the extracted cord KC of the circumferential belt layer T06b to 15 GPa or more, it is possible to effectively suppress the radial growth of the tire when internal pressure is applied. On the other hand, by setting the elastic modulus E2 in a low strain region of the extracted cord KC of the circumferential belt layer T06b to 60 GPa or less, it is possible to set the elastic modulus E1 in a high strain region of the extracted cord KC within a desired range. For similar reasons, it is more preferable that the elastic modulus E2 in a low strain region of the extracted cord KC of the circumferential belt layer T06b is 25 GPa to 60 GPa.

To adjust the elastic modulus E1 in a high strain region of the extracted cord KC of the circumferential belt layer T06b to the above range, it is possible to use, as the cord T06bc of the circumferential belt layer T06b, a cord formed by twisting together a plurality of filaments to form a strand, and then further twisting together such strands, without a core strand. In addition, the filament diameter, number of strands, twisting angle, cord diameter, and the like can be adjusted. Also, to adjust the elastic modulus E2 in a low strain region of the extracted cord KC of the circumferential belt layer T06b to the above range, it is possible to use, as the cord T06bc of the circumferential belt layer T06b, a cord formed by twisting together a plurality of filaments to form a strand, and then further twisting together such strands, without a core strand. In addition, this can be achieved by adjusting the filament diameter, number of strands, twisting angle, cord diameter, and the like. In addition to these, it can be determined according to the expansion ratio during tire manufacturing.

In each example described in this specification, it is preferable that the ratio E1/E2 of the elastic modulus E1 in a high strain region of the extracted cord KC of the circumferential belt layer T06b to the elastic modulus E2 in a low strain region of the extracted cord KC of the circumferential belt layer T06b is 1.1 to 3.0. By setting the ratio E1/E2 to 1.1 or more, the elastic modulus E2 can be made appropriately large relative to the elastic modulus E1, thereby effectively suppressing the radial growth of the tire when internal pressure is applied. On the other hand, by setting the ratio E1/E2 to 3.0 or less, the elastic modulus E1 can be made appropriately small relative to the elastic modulus E2, thereby reducing the rigidity step between the circumferential belt layer T06b and the intersecting belt layer T06c, reducing the strain in that region, and improving the cord break resistance of the cords T06bc. For similar reasons, it is more preferable that the above ratio E1/E2 is 1.1 to 2.5.

In each example described in the present specification, it is preferable that the inflection point P (FIG. 3) of the extracted cord KC of the circumferential belt layer T06b is within a strain of 0.3% to 0.7% and a load of 100 N to 350 N.

The inflection point P of the extracted cord KC of the circumferential belt layer T06b is the intersection point of the tangent at 0.25% strain (one-dot chain line) and the tangent at 1.0% strain (broken line) on the load-strain curve (FIG. 3) of the extracted cord KC of the circumferential belt layer T06b.

When the inflection point P is within a strain of 0.3% or more and 0.7% or less, and within a load of less than 100 N, the elastic modulus at low load is low, and it is not possible to sufficiently suppress the radial growth of the tire when internal pressure is applied. On the other hand, when the inflection point P is within a strain of 0.3% or more and 0.7% or less, and within a load exceeding 350 N, the elastic modulus at high load is high, and due to the rigidity step between the circumferential belt layer T06b and the intersecting belt layer T06c, the strain in this region becomes large, and it is not possible to sufficiently obtain the cord cut resistance of the cord T06bc.

Further, when the inflection point P is within a load of 100 N or more and 350 N or less, and within a strain of less than 0.3%, the elastic modulus at high load is high, and due to the rigidity step between the circumferential belt layer T06b and the intersecting belt layer T06c, the strain in this region becomes large, and it is not possible to sufficiently obtain the cord cut resistance of the cord T06bc. On the other hand, when the inflection point P is within a load of 100 N or more and 350 N or less, and within a strain exceeding 0.7%, the elastic modulus E2 in the low strain region decreases, and it becomes impossible to effectively suppress the radial growth of the tire when internal pressure is applied.

From such a viewpoint, it is more preferable that the inflection point P of the extracted cord KC of the circumferential belt layer T06b is within a strain of 0.3 % to 0.6% and a load of 100 N to 320 N.

The following describes the properties of the green cord NC of the circumferential belt layer T06b, which are suitable for obtaining the respective physical properties of the extracted cord KC of the circumferential belt layer T06b described above.

Note that, in the present specification, "green cord (NC)" refers to the cord itself without coating rubber. The green cord NC corresponds to the state of the cord before vulcanization of the tire T01. For example, the green cord NC of the circumferential belt layer T06b schematically illustrated in FIG. 6 is the cord T06bc itself.

In each example described in the present specification, it is preferable that the inflection point of the green cord NC of the circumferential belt layer T06b is within a strain of 1.5% to 3.0% and a load of 30 N to 80 N, and more preferably within a strain of 1.5% to 3.0% and a load of 30 N to 70 N. The following describes this matter.

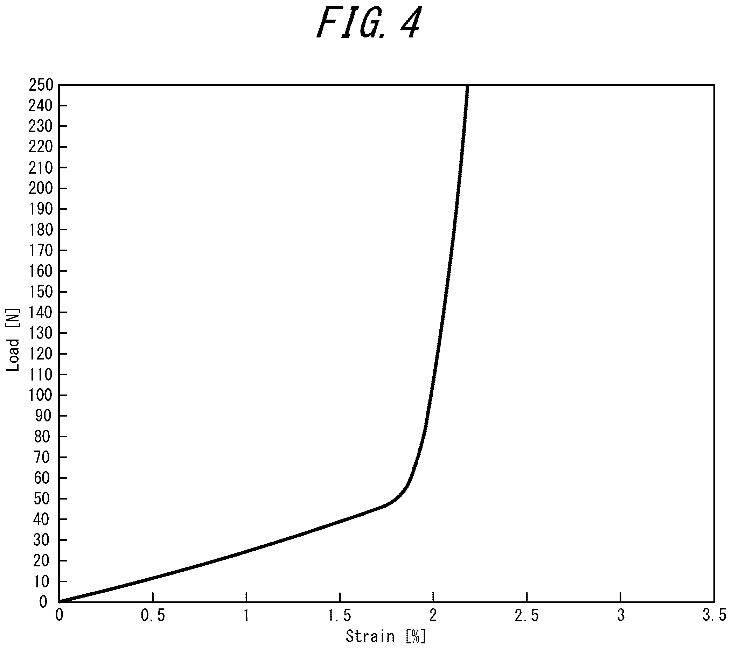

FIG. 4 is a diagram illustrating an example of the S-S curve (load-strain curve) of the green cord NC of the circumferential belt layer T06b in FIG. 2.

The inflection point of the green cord NC of the circumferential belt layer T06b refers to the intersection point of the tangent at a load of 10 N and the tangent at a load of 200 N on the load-strain curve (FIG. 4) of the green cord NC of the circumferential belt layer T06b.

In each example described in the present specification, it is preferable that the elastic modulus E4 in the low strain region of the green cord NC of the circumferential belt layer T06b is 1 GPa to 5 GPa, and more preferably 1 GPa to 3 GPa.

The elastic modulus E4 in the low strain region of the green cord NC of the circumferential belt layer T06b refers to the value obtained by dividing the slope of the tangent at a load of 10 N on the load-strain curve (FIG. 4) of the green cord NC of the circumferential belt layer T06b by the total cross-sectional area of the filaments constituting the cord.

By setting the elastic modulus E4 in the low strain region of the green cord NC of the circumferential belt layer T06b to 1 GPa to 5 GPa, it is possible to manufacture an appropriate tire in the belt forming and tire vulcanization processes, and it is also possible to effectively suppress the occurrence of buckling in the tire after vulcanization.

In each example described in the present specification, it is preferable that the elastic modulus E3 in the high strain region of the green cord NC of the circumferential belt layer T06b is 30 GPa to 80 GPa, and more preferably 35 GPa to 75 GPa.

The elastic modulus E3 in the high strain region of the green cord NC of the circumferential belt layer T06b refers to the value obtained by dividing the slope of the tangent at a load of 200 N on the load-strain curve (FIG. 4) of the green cord NC of the circumferential belt layer T06b by the total cross-sectional area of the filaments constituting the cord.

By setting the elastic modulus E3 in the high strain region of the green cord NC of the circumferential belt layer T06b within the above range, it becomes easier to adjust the elastic modulus E1 in the high strain region of the extracted cord KC of the circumferential belt layer T06b.

In each example described in the present specification, it is preferable that the ratio E3/E4 of the elastic modulus E3 in the high strain region of the green cord NC of the circumferential belt layer T06b to the elastic modulus E4 in the low strain region of the green cord NC of the circumferential belt layer T06b is 20 to 50, and more preferably 25 to 45.

In each example described in the present specification, as illustrated in FIG. 6, the cord T06bc of the circumferential belt layer T06b is preferably formed by further twisting together a plurality of strands C11, each of which is formed by twisting together a plurality of filaments C12, C13, and the number of strands C11 is preferably 3 to 5.

This is because the elastic modulus E1 in the high strain region of the extracted cord KC of the circumferential belt layer T06b can be appropriately lowered, thereby improving the cord cut resistance. Further, by setting the number of strands to 3 or more, it is possible to ensure the strength of the circumferential belt layer T06b even if the filament diameter is relatively small, while by setting the number of strands to 5 or less, it is possible to suppress the occurrence of strand drop and stabilize the twisting characteristics.

In each example described in the present specification, as illustrated in FIG. 6, the structure of the strand C11 of the cord T06bc of the circumferential belt layer T06b is a 1+N structure, where N is an integer of 4 to 7, and the filament diameter B of the filaments C12, C13 is preferably 0.3 mm or less. In the example of FIG. 6, the cord T06bc is composed of a plurality of sheath strands C11 (no core strand is provided). Each sheath strand C11 is a so-called "1+N structure" in which N sheath filaments C13 (6 in the illustrated example) are arranged around one core filament C12.

By setting the number of core filaments C12 to one, it is possible to suppress the occurrence of twisting defects due to the difference in the amount of twisting shrinkage between the core filament C12 and the sheath filaments C13.

Further, by setting the number of sheath filaments C13 to 4 or more, it is possible to stabilize the twisting shape so that the gaps between the sheath filaments do not become large, while by setting the number of sheath filaments C13 to 7 or less, it is possible to ensure sufficient gaps for rubber to penetrate.

Further, by not providing a core strand, the space at the center of the cord T06bc is filled with rubber, the tightening stress between the strands is dispersed, and the premature breakage of the sheath filaments C13 at the contact portions is suppressed, resulting in good steel cord strength.

Moreover, by setting the filament diameter B of the filaments C12, C13 to 0.3 mm or less, it is possible to suppress the breakage of the filaments C12, C13 due to bending deformation of the filaments C12, C13 caused by the tension of the cord T06bc.

It is preferable that the twisting direction of the strand and the twisting direction of the cord are the same.

The filament diameter B of the filaments is more preferably 0.25 mm or less. On the other hand, if the filament diameter B is too small, sufficient cord strength cannot be obtained, so the filament diameter B is preferably 0.15 mm or more.

In each example described in the present specification, it is preferable that the cord diameter A of the cord T06bc of the circumferential belt layer T06b is 1.5 mm to 2.2 mm, and more preferably 1.9 mm to 2.2 mm. By setting the cord diameter A to 1.5 mm or more, it is possible to ensure the strength of the circumferential belt layer T06b, while by setting it to 2.2 mm or less, it is possible to reduce the weight of the tire.

The ratio B12/B13 of the filament diameter B12 of the core filament C12 to the filament diameter B13 of the sheath filament C13 is preferably 1.10 to 1.16. By setting the ratio B12/B13 to 1.16 or less, it is possible to make the twisting characteristics of the cord uniform so that the arrangement of the sheath filaments does not become uneven, while by setting the ratio B12/B13 to 1.10 or more, it is possible to ensure sufficient gaps for rubber to penetrate.

In each example described in the present specification, it is preferable that the twisting angle of the sheath strand C11 with respect to the cord axis in the cord T06bc of the circumferential belt layer T06b is 15.0° to 25.0°. The twisting angle refers to the angle formed by the helical axis of the strand with respect to the longitudinal direction of the cord, and is the average value in the longitudinal direction of the cord. By setting the twisting angle to 15.0° or more, it is possible to set the elastic moduli E3 and E1 in the high strain region of the green cord NC and the extracted cord KC of the circumferential belt layer T06b to not more than the upper limit, while by setting it to 25.0° or less, it is possible to stabilize the twisting characteristics.

In each example described in the present specification, the material of the filaments C12, C13 in the cord T06bc of the circumferential belt layer T06b is not particularly limited, but it is preferable, for example, that it is high-carbon steel with a carbon content of 0.80 mass% or more. By using high-carbon steel with a carbon content of 0.80 mass% or more, which has high hardness, as the material of the filaments C12, C13, sufficient cord strength can be obtained. On the other hand, from the viewpoint of fatigue resistance, it is preferable that the carbon content is 1.5% or less.

In the examples of FIGS. 1 and 2, the belt T06 is further provided, in addition to the two layers of intersecting belt layers T06c and one layer of circumferential belt layer T06b, with one layer of widthwise belt layer T06a and one layer of protective belt layer T06d, each as a belt layer T06p.

As illustrated in FIG. 2, the widthwise belt layer T06a includes one or more cords T06ac and coating rubber T06ar covering the cords T06ac. The cords T06ac of the widthwise belt layer T06a extend at an inclination angle of approximately 90° with respect to the tire circumferential direction. The widthwise belt layer T06a is positioned on the tire radial inner side of the circumferential belt layer T06b and is the belt layer T06p located innermost in the tire radial direction in the belt T06.

The protective belt layer T06d includes one or more cords T06dc and coating rubber T06dr covering the cords T06dc. The cords T06dc of the protective belt layer T06d extend at an inclination angle of, for example, 15° to 50° with respect to the tire circumferential direction. Preferably, they extend at an inclination angle of 15° to 40° with respect to the tire circumferential direction. In this example, among the two layers of intersecting belt layers T06c, the cords T06cc of the intersecting belt layer T06c on the tire radial outer side and the cords T06dc of the protective belt layer T06d extend in the same direction in the tire circumferential direction from the tire widthwise inner side to the outer side in the same tire widthwise half portion with the tire equator CL as the boundary. The protective belt layer T06d is positioned on the tire radial outer side of the two layers of intersecting belt layers T06c and is the belt layer T06p located outermost in the tire radial direction in the belt T06.

In the illustrated example, the widths in the tire width direction of the respective belt layers T06p, in order from largest to smallest, are the belt layers T06c1, T06c2, T06b, T06a, and T06d, but the present invention is not limited to this case.

The number of layers of the belt layer T06p and the width in the tire width direction of the belt layer T06p can be variously configured.

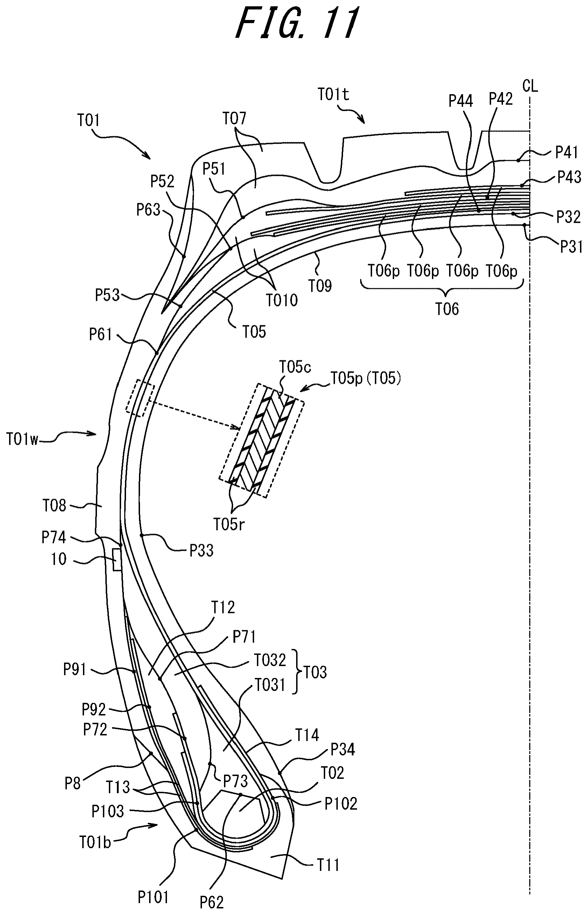

In each example described in the present specification, the tire T01 may have any internal structure in portions other than the above-described belt T06. The following describes an example of the internal structure of the tire T01 with reference to FIG. 11. The internal structure in the example of FIG. 11 is particularly suitable when applied to a pneumatic tire for heavy loads. Note that the configuration of the belt T06 in the example of FIG. 11 is different from the configuration of the belt T06 in the examples of FIGS. 1 and 2, but the configuration of the belt T06 in the examples of FIGS. 1 and 2 may also be adopted.

As illustrated in FIG. 11, the tire T01 includes a tread portion T01t, a pair of sidewall portions T01w extending radially inward from both ends in the tire width direction of the tread portion T01t, and a pair of bead portions T01b provided at the radially inner ends of the respective sidewall portions T01w. The bead portion T01b is configured to contact the rim on the radially inner side and the widthwise outer side of the rim when the tire T01 is mounted on the rim.

The tire T01 further includes a pair of bead cores T02, a pair of bead fillers T03, a carcass T05, a belt T06, tread rubber T07, side rubber T08, and an inner liner T09.

Each bead core T02 is embedded in the corresponding bead portion T01b. The bead core T02 includes a plurality of bead wires covered with rubber. The bead wire is preferably made of metal (for example, steel), but may also be made of organic fibers such as polyester, nylon, rayon, or aramid. The bead wire may be, for example, a monofilament or a twisted wire.

Each bead filler T03 is positioned radially outward of the corresponding bead core T02. The bead filler T03 extends in a tapered shape toward the radially outer side of the tire. The bead filler T03 is made of rubber.

Generally, the bead filler is sometimes referred to as a "stiffener."

As illustrated in FIG. 11, the bead filler T03 may be composed of a plurality (two in the example of FIG. 11) of bead filler portions T031 and T032. The rubber compositions constituting the respective bead filler portions T031 and T032 are different from each other. However, the rubber composition constituting each bead filler portion T031, T032 is substantially the same throughout the entire bead filler portion T031, T032. These bead filler portions T031 and T032 may, for example, have different hardnesses. These bead filler portions T031 and T032 are, for example, arranged (laminated) along the tire radial direction. For example, among these bead filler portions T031 and T032, the bead filler portion T032 located outermost in the tire radial direction may be softer than the other bead filler portion T031.

Alternatively, the bead filler T03 may be composed of only one bead filler portion; in other words, the rubber composition constituting the bead filler T03 may be substantially the same throughout the entire bead filler T03.

The carcass T05 extends across the pair of bead cores T02 and extends in a toroidal shape. The carcass T05 is composed of one or more (one in the example of FIG. 11) carcass plies T05p. Each carcass ply T05p includes one or more cords T05c and coating rubber T05r covering the cords T05c. The cords T05c may be formed of monofilament or twisted wire.

The cords T05c are preferably made of metal (for example, steel), but may also be made of organic fibers such as polyester, nylon, rayon, or aramid.

The carcass T05 is preferably of a radial structure, but may also be of a bias structure.

The tread rubber T07 is positioned on the radially outer side of the belt T06 in the tread portion T01t. The tread rubber T07 forms the tread surface, which is the radially outer surface of the tread portion T01t. A tread pattern is formed on the tread surface.

The side rubber T08 is positioned in the sidewall portion T01w. The side rubber T08 forms the outer surface in the tire width direction of the sidewall portion T01w. The side rubber T08 is positioned on the tire widthwise outer side of the carcass T05. The side rubber T08 is positioned on the tire widthwise outer side of the bead filler T03. The side rubber T08 is formed integrally with the tread rubber T07.

The inner liner T09 is disposed on the inner side of the carcass T05 in the tire and may, for example, be laminated on the inner side of the carcass T05 in the tire. The inner liner T09 is composed, for example, of butyl-based rubber with low air permeability. The butyl-based rubber includes, for example, butyl rubber and halogenated butyl rubber, which is a derivative thereof. The inner liner T09 is not limited to butyl-based rubber and may be composed of other rubber compositions, resins, or elastomers.

As illustrated in FIG. 11, the tire T01 may be provided with cushion rubber T10 between the carcass T05 and the tread rubber T07 in the tire radial direction. The cushion rubber T10 may be positioned near the tire widthwise end of the belt T06, as in the example of FIG. 11.

As illustrated in FIG. 11, the tire T01 may be provided with a rubber chafer T11 at the portion configured to contact the rim in each bead portion T01b.

As illustrated in FIG. 11, the tire T01 may be provided with one or more (one in the example of FIG. 11) wire chafers T14 around each bead core T02. The wire chafer T14 may be disposed on the side of the carcass T05 opposite to the bead core T02, as in the example of FIG. 11. The wire chafer T14 is made of metal (for example, steel).

As illustrated in FIG. 11, the tire T01 may be provided with one or more (two in the example of FIG. 11) nylon chafers T13 around each bead core T02. The nylon chafer T13 may be disposed on the side of the carcass T05 opposite to the bead core T02, as in the example of FIG. 11. The nylon chafer T13 is made of nylon.

In the example of FIG. 11, each nylon chafer T13 is disposed on the side of the wire chafer T14 opposite to the bead core T02.

As illustrated in FIG. 11, the tire T01 may be provided with hat rubber T12 between the bead filler T03 and the side rubber T08 in the tire width direction in each tire half portion.

In the example of FIG. 11, the hat rubber T12 is disposed between the bead filler T03 and each nylon chafer T13 in the tire width direction.

The tire T01 may be provided with an RF tag 10 as a communication device. The RF tag 10 includes an IC chip and an antenna. The RF tag 10 may, for example, be disposed sandwiched between positions of a plurality of members, either of the same or different types, constituting the tire T01. By doing so, it becomes easier to attach the RF tag 10 during production of the tire T01, thereby improving the productivity of the tire T01 equipped with the RF tag 10. As in the example of FIG. 11, the RF tag 10 may, for example, be disposed sandwiched between the bead filler T03 and another member adjacent to the bead filler T03.

The RF tag 10 may also be embedded within any of the members constituting the tire T01. By doing so, compared to the case where it is disposed sandwiched between a plurality of members constituting the tire T01, the load applied to the RF tag 10 can be reduced. As a result, the durability of the RF tag 10 can be improved. In this example, the RF tag 10 may, for example, be embedded within a rubber member such as the tread rubber T07 or the side rubber T08.

It is preferable that the RF tag 10 is not disposed at a position that serves as a boundary between members having different rigidity in the peripheral length direction, which is the direction along the outer surface of the tire in a cross-sectional view in the tire width direction. By doing so, the RF tag 10 is not disposed at a position where strain is likely to concentrate due to a rigidity step. Therefore, the load applied to the RF tag 10 can be reduced. As a result, the durability of the RF tag 10 can be improved. In this example, it is preferable that the RF tag 10 is not disposed at a position that serves as a boundary between the end portion of the carcass T05 in a cross-sectional view in the tire width direction and a member adjacent to the end portion of the carcass T05 (for example, the side rubber T08).

The number of RF tags 10 is not particularly limited. The tire T01 may be provided with only one RF tag 10, or may be provided with two or more RF tags 10. Here, as an example of a communication device, the RF tag 10 is illustrated and described, but a communication device different from the RF tag 10 may also be used.

The RF tag 10 may, for example, be disposed in the tread portion T01t of the tire T01. By doing so, the RF tag 10 is not damaged by a side cut of the tire T01.

The RF tag 10 may, for example, be disposed in the tread center portion in the tire width direction. The tread center portion is a position in the tread portion T01t where flexure is less likely to concentrate. By doing so, the load applied to the RF tag 10 can be reduced. As a result, the durability of the RF tag 10 can be improved. Furthermore, it is possible to suppress the occurrence of differences in communication with the RF tag 10 from both outer sides of the tire T01 in the tire width direction. In this example, the RF tag 10 may, for example, be disposed within a range of 1/2 of the tread width centered on the tire equatorial plane CL in the tire width direction.

The RF tag 10 may, for example, be disposed at the tread edge in the tire width direction. When the position of the reader that communicates with the RF tag 10 is predetermined, the RF tag 10 may, for example, be disposed at one tread edge on the side closer to the reader. In this example, the RF tag 10 may, for example, be disposed within a range of 1/4 of the tread width with the tread edge as the outer end in the tire width direction.

The RF tag 10 may, for example, be disposed on the tire inner cavity side relative to the carcass T05, which includes one or more carcass plies T05p spanning between the bead portions T01b. By doing so, the RF tag 10 becomes less susceptible to damage from external impacts, side cuts, or nail punctures. As one example, the RF tag 10 may be disposed in close contact with the surface of the carcass T05 on the tire inner cavity side (see point P32 in FIG. 11). As another example, when another member is present on the tire inner cavity side relative to the carcass T05, the RF tag 10 may, for example, be disposed between the carcass T05 and another member located on the tire inner cavity side relative to the carcass T05. As an example of another member located on the tire inner cavity side relative to the carcass T05, the inner liner T09 forming the inner surface of the tire may be mentioned. As another example, the RF tag 10 may be attached to the inner surface of the tire facing the tire inner cavity (see points P31, P33, and P34 in FIG. 11). By configuring the RF tag 10 to be attached to the inner surface of the tire, it becomes easier to attach the RF tag 10 to the tire T01 and to inspect or replace the RF tag 10. That is, the attachability and maintainability of the RF tag 10 can be improved. Furthermore, by attaching the RF tag 10 to the inner surface of the tire, it is possible to prevent the RF tag 10 from becoming a nucleus of tire failure compared to a configuration in which the RF tag 10 is embedded within the tire T01.

In addition, when the carcass T05 is provided with a plurality of carcass plies T05p and there is a position where the plurality of carcass plies T05p are stacked, the RF tag 10 may be disposed between the stacked carcass plies T05p.

The RF tag 10 may, for example, be disposed in the tread portion T01t of the tire T01, on the outer side in the tire radial direction relative to the belt T06, which includes one or more belt layers T06p. As one example, the RF tag 10 may be disposed in close contact with the belt T06 on the outer side in the tire radial direction relative to the belt T06 (see point P43 in FIG. 11). As another example, when a belt reinforcement layer is provided, the RF tag 10 may be disposed in close contact with the belt reinforcement layer on the outer side in the tire radial direction relative to the belt reinforcement layer. As another example, the RF tag 10 may be embedded within the tread rubber T07 on the outer side in the tire radial direction relative to the belt T06 (see point P41 in FIG. 11). By disposing the RF tag 10 in the tread portion T01t of the tire T01 on the outer side in the tire radial direction relative to the belt T06, communication with the RF tag 10 from the outside of the tire T01 in the tire radial direction is less likely to be hindered by the belt T06. Therefore, communication with the RF tag 10 from the outside of the tire T01 in the tire radial direction can be improved.

Furthermore, the RF tag 10 may, for example, be disposed in the tread portion T01t of the tire T01 on the inner side in the tire radial direction relative to the belt T06. By doing so, the outer side of the RF tag 10 in the tire radial direction is covered by the belt T06, so the RF tag 10 becomes less susceptible to damage from impacts or nail punctures from the tread surface. As one example, the RF tag 10 may be disposed between the belt T06 and the carcass T05 located on the inner side in the tire radial direction relative to the belt T06 in the tread portion T01t of the tire T01 (see point P44 in FIG. 11).

In addition, when the belt T06 is provided with a plurality of belt layers T06p, the RF tag 10 may be disposed between any two belt layers T06p in the tread portion T01t of the tire T01 (see point P42 in FIG. 11). By doing so, the outer side of the RF tag 10 in the tire radial direction is covered by one or more belt layers T06p, so the RF tag 10 becomes less susceptible to damage from impacts or nail punctures from the tread surface.

The RF tag 10 may, for example, be disposed sandwiched between the cushion rubber T10 and the tread rubber T07, or between the cushion rubber T10 and the side rubber T08 (see points P51 and P53 in FIG. 11). By doing so, impacts on the RF tag 10 can be mitigated by the cushion rubber T10. Therefore, the durability of the RF tag 10 can be improved.

Furthermore, the RF tag 10 may, for example, be embedded within the cushion rubber T10. In addition, the cushion rubber T10 may be composed of a plurality of adjacent rubber members of the same or different types. In such a case, the RF tag 10 may be disposed sandwiched between a plurality of rubber members constituting the cushion rubber T10 (see point P52 in FIG. 11).

This configuration is particularly suitable when the tire T01 is a heavy-duty pneumatic tire (for example, a truck/bus pneumatic tire, an off-the-road (construction vehicle) pneumatic tire, etc.).

The RF tag 10 may, for example, be disposed at a position of the sidewall portion T01w or the bead portion T01b of the tire T01. The RF tag 10 may, for example, be disposed at one sidewall portion T01w or one bead portion T01b on the side closer to a reader capable of communicating with the RF tag 10. By doing so, communication between the RF tag 10 and the reader can be enhanced. As one example, the RF tag 10 may be disposed between the carcass T05 and the side rubber T08, or between the tread rubber T07 and the side rubber T08 (see points P61 and P63 in FIG. 11).

The RF tag 10 may, for example, be disposed between the position of the tire maximum width and the position of the tread surface in the tire radial direction. By doing so, compared to a configuration in which the RF tag 10 is disposed on the inner side in the tire radial direction relative to the position of the tire maximum width, communication with the RF tag 10 from the outside of the tire T01 in the tire radial direction can be enhanced.

The RF tag 10 may, for example, be disposed on the inner side in the tire radial direction relative to the position of the tire maximum width. By doing so, the RF tag 10 is disposed near the bead portion T01b, which has high rigidity. Therefore, the load applied to the RF tag 10 can be reduced. As a result, the durability of the RF tag 10 can be improved. As one example, the RF tag 10 may be disposed at a position adjacent to the bead core T02 in the tire radial direction or the tire width direction (see point P62 in FIG. 11). The vicinity of the bead core T02 is less likely to concentrate strain. Therefore, the load applied to the RF tag 10 can be reduced. As a result, the durability of the RF tag 10 can be improved.

In particular, it is preferable that the RF tag 10 is disposed on the inner side in the tire radial direction relative to the position of the tire maximum width and on the outer side in the tire radial direction relative to the bead core T02 of the bead portion T01b. By doing so, the durability of the RF tag 10 can be improved, and communication between the RF tag 10 and the reader is less likely to be hindered by the bead core T02, thereby enhancing the communication performance of the RF tag 10.

Furthermore, when the side rubber T08 is composed of a plurality of adjacent rubber members of the same or different types in the tire radial direction, the RF tag 10 may be disposed sandwiched between a plurality of rubber members constituting the side rubber T08.

The RF tag 10 may be disposed sandwiched between the bead filler T03 and a member adjacent to the bead filler T03. By doing so, the RF tag 10 can be disposed at a position where strain is less likely to concentrate due to the arrangement of the bead filler T03. Therefore, the load applied to the RF tag 10 can be reduced. As a result, the durability of the RF tag 10 can be improved.

The RF tag 10 may, for example, be disposed sandwiched between the bead filler T03 and the carcass T05. The portion of the carcass T05 that sandwiches the RF tag 10 together with the bead filler T03 may be located on the outer side in the tire width direction relative to the bead filler T03, or may be located on the inner side in the tire width direction. When the portion of the carcass T05 that sandwiches the RF tag 10 together with the bead filler T03 is located on the outer side in the tire width direction relative to the bead filler T03, the load applied to the RF tag 10 due to impacts or damage from the outside of the tire T01 in the tire width direction can be further reduced. As a result, the durability of the RF tag 10 can be further improved.

Furthermore, the bead filler T03 may include a portion disposed adjacent to the side rubber T08. In such a case, the RF tag 10 may be disposed sandwiched between the bead filler T03 and the side rubber T08.

Furthermore, the bead filler T03 may include a portion disposed adjacent to the rubber chafer T11. In such a case, the RF tag 10 may be disposed sandwiched between the bead filler T03 and the rubber chafer T11.

This configuration is particularly suitable when the tire T01 is a passenger vehicle pneumatic tire.

The RF tag 10 may be disposed sandwiched between the stiffener T03 and a member adjacent to the stiffener T03. By doing so, the RF tag 10 can be disposed at a position where strain is less likely to concentrate due to the arrangement of the stiffener T03. Therefore, the load applied to the RF tag 10 can be reduced. As a result, the durability of the RF tag 10 can be improved. The RF tag 10 may, for example, be disposed sandwiched between the stiffener T03 and the side rubber T08 (see point P74 in FIG. 11).

Furthermore, the RF tag 10 may, for example, be disposed sandwiched between the stiffener T03 and the carcass T05 (see point P72 in FIG. 11). The portion of the carcass T05 that sandwiches the RF tag 10 together with the stiffener T03 may be located on the outer side in the tire width direction relative to the stiffener T03, or may be located on the inner side in the tire width direction. When the portion of the carcass T05 that sandwiches the RF tag 10 together with the stiffener T03 is located on the outer side in the tire width direction relative to the stiffener T03, the load applied to the RF tag 10 due to impacts or damage from the outside of the tire T01 in the tire width direction can be further reduced. As a result, the durability of the RF tag 10 can be further improved.

The stiffener T03 may include a portion disposed adjacent to the rubber chafer T11. In such a case, the RF tag 10 may be disposed sandwiched between the stiffener T03 and the rubber chafer T11.

The stiffener T03 may include a portion adjacent to the hat rubber T12 on the outer side in the tire width direction. In such a case, the RF tag 10 may be disposed sandwiched between the stiffener T03 and the hat rubber T12 (see point P71 in FIG. 11).

The stiffener T03 may be composed of a plurality of rubber members having different hardness. In such a case, the RF tag 10 may be disposed sandwiched between a plurality of rubber members constituting the stiffener T03 (see point P73 in FIG. 11).

The RF tag 10 may be disposed sandwiched between the hat rubber T12 and a member adjacent to the hat rubber T12. The RF tag 10 may, for example, be disposed sandwiched between the hat rubber T12 and the carcass ply T05p. By doing so, impacts on the RF tag 10 can be mitigated by the hat rubber T12. Therefore, the durability of the RF tag 10 can be improved.

This configuration is particularly suitable when the tire T01 is a heavy-duty pneumatic tire (for example, a truck/bus pneumatic tire, an off-the-road (construction vehicle) pneumatic tire, etc.).

The RF tag 10 may, for example, be disposed sandwiched between the rubber chafer T11 and the side rubber T08 (see point P8 in FIG. 11). By doing so, the RF tag 10 can be disposed at a position where strain is less likely to concentrate due to the arrangement of the rubber chafer T11. Therefore, the load applied to the RF tag 10 can be reduced. As a result, the durability of the RF tag 10 can be improved.

The RF tag 10 may, for example, be disposed sandwiched between the rubber chafer T11 and the carcass T05. By doing so, the load applied to the RF tag 10 due to impacts or damage from the rim can be reduced. Therefore, the durability of the RF tag 10 can be improved.

The RF tag 10 may be disposed sandwiched between the nylon chafer T13 and another member adjacent to the nylon chafer T13 on the outer or inner side in the tire width direction. By doing so, the position of the RF tag 10 becomes less likely to fluctuate during tire deformation. Therefore, the load applied to the RF tag 10 during tire deformation can be reduced. As a result, the durability of the RF tag 10 can be improved.

The nylon chafer T13 may, for example, include a portion adjacent to the rubber chafer T11 on the outer side in the tire width direction. In such a case, the RF tag 10 may be disposed sandwiched between the nylon chafer T13 and the rubber chafer T11 (see point P101 in FIG. 11). The nylon chafer T13 may, for example, include a portion adjacent to the side rubber T08 on the outer side in the tire width direction. In such a case, the RF tag 10 may be disposed sandwiched between the nylon chafer T13 and the side rubber T08 (see point P91 in FIG. 11).

The nylon chafer T13 may, for example, include a portion adjacent to the stiffener T03 on the inner side in the tire width direction. In such a case, the RF tag 10 may be disposed sandwiched between the nylon chafer T13 and the stiffener T03. Furthermore, the nylon chafer T13 may, for example, include a portion adjacent to the hat rubber T12 on the inner side in the tire width direction. In such a case, the RF tag 10 may be disposed sandwiched between the nylon chafer T13 and the hat rubber T12 (see point P92 in FIG. 11). Furthermore, the nylon chafer T13 may, for example, include a portion adjacent to the carcass T05 on the inner side in the tire width direction. In such a case, the RF tag 10 may be disposed sandwiched between the nylon chafer T13 and the carcass T05. Furthermore, the nylon chafer T13 may, for example, include a portion adjacent to the wire chafer T14 on the inner side in the tire width direction. In such a case, the RF tag 10 may be disposed sandwiched between the nylon chafer T13 and the wire chafer T14.

As described above, the RF tag 10 may be disposed sandwiched between the nylon chafer T13 and another member adjacent to the nylon chafer T13 on the outer or inner side in the tire width direction. In particular, by having the outer side of the RF tag 10 in the tire width direction covered by the nylon chafer T13, the load applied to the RF tag 10 due to impacts or damage from the outside of the tire in the tire width direction can be further reduced. Therefore, the durability of the RF tag 10 can be further improved.

This configuration is particularly suitable when the tire T01 is a heavy-duty pneumatic tire (for example, a truck/bus pneumatic tire, an off-the-road (construction vehicle) pneumatic tire, etc.).

The RF tag 10 may be disposed sandwiched between the wire chafer T14 and another member adjacent to the wire chafer T14 on the inner or outer side in the tire width direction (see point P102 in FIG. 11). By doing so, the position of the RF tag 10 becomes less likely to fluctuate during tire deformation. Therefore, the load applied to the RF tag 10 during tire deformation can be reduced. As a result, the durability of the RF tag 10 can be improved. The other member adjacent to the wire chafer T14 on the inner or outer side in the tire width direction may be, for example, a rubber member such as the rubber chafer T11. Further, the other member adjacent to the wire chafer T14 on the inner or outer side in the tire width direction may be, for example, the carcass T05.

EXAMPLES

In order to confirm the effects of the present disclosure, tires according to Comparative Example and Invention Examples 1 and 2 were produced, tested, and evaluated, which will be described below. The specifications of the tires of each example, together with the evaluation results, are presented in Table 1 below. In addition, FIG. 3 and FIG. 4 respectively illustrate the S-S curves of the extracted cord KC and the green cord NC for each example. In the tires of each example, the belt T06 included a pair of intersecting belt layers T06c and one or more circumferential belt layers T06b positioned on the tire radial inner side thereof. The belt T06 of the tires of the invention examples was basically the same as that illustrated in FIGS. 1 to 2. In the tires of each example, the cords T06cc of each intersecting belt layer T06c had the same angle $\theta$ with respect to the tire circumferential direction.

In the tires of each example, the cut resistance of the circumferential layer cords was evaluated. Further, in order to evaluate the effect on uneven wear resistance, the aforementioned tire structure and the conditions described below were set, and evaluation was performed using an FEM model. The cut resistance effect of the cords T06bc of the circumferential belt layer T06b was evaluated by assembling a tire of size 445/50R22.5 onto a rim, inflating it to the prescribed internal pressure, applying a load of 130% of the maximum load, and conducting a drum drive at a speed of 60 km/h for 20,000 km, after which the number of cord breaks was measured. The evaluation is expressed as an index with the number of breaks in the comparative example set to 100, and a larger value indicates fewer breaks and better performance. The conditions for the FEM evaluation were an internal pressure of 690 kPa, a load of 37.85 kN, and rolling at a speed of 60 km/h. For each tire model, the circumferential wear energy at the contact patch shoulder portion was calculated using the FEM model, and the result was used as the evaluation of uneven wear resistance. A positive and larger value indicates better wear resistance.

[Table 1]

| | | | Comparative Example | Invention Example 1 | Invention Example 2 |
|---|---|---|---|---|---|
| | Green cord NC | Inflection point (strain: %) | | 1.89 | 1.97 |
| | | Inflection point (load: N) | | 64 | 46 |
| | | Elastic modulus E4 (GPa) in low strain region | | 2.4 | 1.6 |
| | | Elastic modulus E3 (GPa) in high strain region | | 57 | 65 |
| | Extracted cord KC | Inflection point (strain: %) | 0.74 | 0.56 | 0.49 |
| | | Inflection point (load: N) | 49 | 216 | 248 |
| | | Elastic modulus E2 (GPa) in low strain region | 7 | 28 | 39 |
| | | Elastic modulus E1 (GPa) in high strain region | 92 | 55 | 59 |
| | Cord structure | | 3+9+15x0.23 | 4x(0.28+6x0.25) | 5x(0.255+6x0.225) |

(continued)

| | | | Comparative Example | Invention Example 1 | Invention Example 2 |
|---|---|---|---|---|---|
| Circumferential belt layer T06b | Drawing | | FIG. 7 | FIG. 8 | FIG. 6 |
| | Cord diameter A (mm) | | 1.40 | 1.96 | 1.98 |
| | Maximum value of filament diameter B / cord diameter A | | 0.164 | 0.143 | 0.129 |
| | Cord rigidity Sb (GPa) | | 92 | 55 | 59 |
| | Amount of steel per unit width per layer Mb (mm$^2$) | | 25.2 | 28.5 | 29.0 |
| | Longitudinal rigidity of cord ELb (kN) | | 2327 | 1569 | 1713 |
| | Cord angle $\alpha$ (°) with respect to tire circumferential direction | | 0 | 0 | 0 |
| | Number of layers Nb | | 2 | 1 | 1 |
| | ELb $\times$ Nb (kN) | | 4654 | 1569 | 1713 |
| Innermost intersecting belt layer T06c1 | Cord structure | | 2x0.25+6x0.33 | 2x0.36+8x0.34 | 2x0.36+8x0.34 |
| | Cord rigidity Sc1 (GPa) | | 147 | 147 | 147 |
| | Amount of steel per unit width per layer Mc1 (mm$^2$) | | 15.31 | 17.76 | 17.76 |
| | Longitudinal rigidity of cord ELc1 (kN) | | 2245 | 2609 | 2609 |
| | Cord angle $\theta$1 (°) with respect to tire circumferential direction | | 51 | 22 | 22 |
| | ELc1 $\times$ cos$^4\theta$1 (kN) | | 352 | 1928 | 1928 |
| Outermost intersecting belt layer T06c2 | Cord structure | | 2x0.25+6x0.33 | 2x0.36+8x0.34 | 2x0.36+8x0.34 |
| | Cord rigidity Sc2 (GPa) | | 147 | 147 | 147 |
| | Amount of steel per unit width per layer Mc2 (mm$^2$) | | 15.31 | 17.76 | 17.76 |
| | Longitudinal rigidity of cord ELc2 (kN) | | 2245 | 2609 | 2609 |
| | Cord angle $\theta$2 (°) with respect to tire circumferential direction | | 51 | 22 | 22 |
| | ELc2 $\times$ cos$^4\theta$2 (kN) | | 352 | 1928 | 1928 |
| ELb $\times$ Nb / (ELc1 $\times$ cos$^4\theta$1 + ELc2 $\times$ cos$^4\theta$2) | | | 6.61 | 0.41 | 0.44 |
| Evaluation | Cord cut resistance effect of circumferential belt layer cord | | 100 | 75 | 450 |
| | Evaluation of uneven wear resistance Ewx circumferential wear energy (J/m$^3$) | | -1.3 | 2.0 | 2.0 |

As can be seen from Table 1, Invention Examples 1 and 2 exhibit superior uneven wear resistance effects for the tire compared to the Comparative Example.

INDUSTRIAL APPLICABILITY

The tire according to the present disclosure can be suitably used for any type of pneumatic tire for four-wheeled vehicles, and is particularly suitable for use as a heavy-duty pneumatic tire (for example, pneumatic tires for trucks and buses, off-the-road (construction vehicle) pneumatic tires, etc.).

REFERENCE SIGNS LIST

T01: tire, T01t: tread portion, T01w: sidewall portion, T01b: bead portion,
T02: bead core,
T03: bead filler (stiffener), T031, T032: bead filler portion,
T05: carcass, T05p: carcass ply, T05c: cord, T05r: coating rubber,
T06: belt, T06p: belt layer,
T06a: widthwise belt layer, T06ac: cord, T06ar: coating rubber,
T06b: circumferential belt layer, T06bc: cord, T06br: coating rubber, KC: extracted cord, NC: green cord, C11: sheath strand (strand), C12: core filament (filament), C13: sheath filament (filament),
T06c: intersecting belt layer, T06c1: intersecting belt layer (innermost intersecting belt layer), T06c2: intersecting belt layer, T06cc: cord, T06cr: coating rubber,
T06d: protective belt layer, T06dc: cord, T06dr: coating rubber,
T07: tread rubber,
T08: side rubber,
T09: inner liner,
T10: cushion rubber,
T11: rubber chafer,
T12: hat rubber,
T13: nylon chafer,
T14: wire chafer,
CL: tire equatorial plane,
10: RF tag

**Claims**

1. A tire comprising: one or more circumferential belt layers; and

   a pair of intersecting belt layers disposed adjacent to the circumferential belt layers,
   wherein cords of each of the circumferential belt layers have an angle $\alpha$ with respect to the tire circumferential direction of 5° or less,
   wherein the pair of intersecting belt layers have cords that intersect each other in the tire radial direction,
   wherein, when a longitudinal rigidity of the cords of the circumferential belt layers is defined as ELb, the number of layers of the circumferential belt layers is defined as Nb, a longitudinal rigidity of the cords of the innermost intersecting belt layer, which is positioned innermost in the tire radial direction among the pair of intersecting belt layers, is defined as ELc1, an acute angle with respect to the tire circumferential direction of the cords of the innermost intersecting belt layer is defined as $\theta 1$, a longitudinal rigidity of the cords of the outermost intersecting belt layer, which is positioned outermost in the tire radial direction among the pair of intersecting belt layers, is defined as ELc2, and an acute angle with respect to the tire circumferential direction of the cords of the outermost intersecting belt layer is defined as $\theta 2$, the following expression (1) is satisfied:

$$ELb \times Nb/(ELc1 \times cos^4\theta 1 + ELc2 \times cos^4\theta 2) < 0.6 \quad ...(1).$$

2. The tire according to claim 1, wherein the acute angle with respect to the tire circumferential direction of the cords of each of the intersecting belt layers is 15° to 40°.

3. The tire according to claim 1, wherein an elastic modulus E1 in a high strain region of the cords of the circumferential belt layers is 30 GPa to 80 GPa.

**4.** The tire according to claim 1, wherein the cords of the circumferential belt layers have a plurality of filaments, and for all of the filaments, a ratio B/A of a filament diameter B to a cord diameter A is 0.13 or less.

**5.** The tire according to claim 1, wherein the tire is provided with only one circumferential belt layer.

**6.** The tire according to claim 1, wherein, for each of the intersecting belt layers, the acute angle with respect to the tire circumferential direction of the cords is the same for both.

# FIG. 1

Tire radial direction

Tire width direction

EP 4 678 418 A1

# FIG. 2

T06

T06c1 (T06c, T06p)
T06cr
T06cc
θ

T06c2 (T06c, T06p)
T06cc
T06cr
θ

T06b (T06p)
T06bc
T06br
α

T06d (T06p)
T06dr T06dc

T06a (T06p)
T06br
T06ac
T06ar

Tire width direction

Tire circumferential direction

CL

EP 4 678 418 A1

# FIG. 3

FIG. 4

EP 4 678 418 A1

# FIG. 5

# FIG. 6

NC (T06bc)

C11

C12

C13

FIG. 7

FIG. 8

FIG. 9

FIG. 10

# FIG. 11

## INTERNATIONAL SEARCH REPORT

| | International application No. |
|---|---|
| | **PCT/JP2023/040814** |

### A. CLASSIFICATION OF SUBJECT MATTER

**B60C 9/18**(2006.01)i; **B60C 9/20**(2006.01)i; **B60C 9/22**(2006.01)i
FI: B60C9/18 K; B60C9/18 G; B60C9/20 E; B60C9/22 G

According to International Patent Classification (IPC) or to both national classification and IPC

### B. FIELDS SEARCHED

Minimum documentation searched (classification system followed by classification symbols)

B60C9/18; B60C9/20; B60C9/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-193684 A (TOYO TIRE & RUBBER CO., LTD.) 17 November 2016 (2016-11-17) claims, paragraphs [0039]-[0046], example 4, table 1, fig. 1 | 1-2, 5-6 |
| A | JP 2006-56351 A (BRIDGESTONE CORPORATION) 02 March 2006 (2006-03-02) | 1-6 |
| A | JP 2018-197019 A (BRIDGESTONE CORPORATION) 13 December 2018 (2018-12-13) | 1-6 |
| A | JP 62-61806 A (BRIDGESTONE CORPORATION) 18 March 1987 (1987-03-18) | 1-6 |
| A | JP 2005-231529 A (BRIDGESTONE CORPORATION) 02 September 2005 (2005-09-02) | 1-6 |
| A | JP 2011-178373 A (THE YOKOHAMA RUBBER CO., LTD.) 15 September 2011 (2011-09-15) | 1-6 |
| A | JP 2010-24611 A (SOC. DE TECHNOLOGIE MICHELIN) 04 February 2010 (2010-02-04) | 1-6 |
| A | JP 4-46801 A (BRIDGESTONE CORPORATION) 17 February 1992 (1992-02-17) | 1-6 |

☐ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 January 2024** | **06 February 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2023/040814**

| Patent document cited in search report | | | Publication date (day/month/year) | Patent family member(s) | | | Publication date (day/month/year) |
|---|---|---|---|---|---|---|---|
| JP | 2016-193684 | A | 17 November 2016 | (Family: none) | | | |
| JP | 2006-56351 | A | 02 March 2006 | (Family: none) | | | |
| JP | 2018-197019 | A | 13 December 2018 | (Family: none) | | | |
| JP | 62-61806 | A | 18 March 1987 | (Family: none) | | | |
| JP | 2005-231529 | A | 02 September 2005 | (Family: none) | | | |
| JP | 2011-178373 | A | 15 September 2011 | (Family: none) | | | |
| JP | 2010-24611 | A | 04 February 2010 | US | 2005/0183808 | A1 | |
| | | | | WO | 2004/003287 | A1 | |
| | | | | EP | 1520069 | A1 | |
| | | | | KR | 10-2005-0016618 | A | |
| JP | 4-46801 | A | 17 February 1992 | (Family: none) | | | |

Form PCT/ISA/210 (patent family annex) (July 2022)

**EP 4 678 418 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023034085 A
- JP 2009196548 A